# EUROPÄISCHE PATENTANMELDUNG

(11) **EP 1 078 784 A2**
(43) Veröffentlichungstag der Anmeldung: **28.02.2001**
(21) Anmeldenummer: 00115705.6
(22) Anmeldetag: 21.07.2000
(51) Int. Cl.: B60G 17/015, B60G 17/052

(54) **Niveauregelsystem mit einem Druckspeicher für ein Fahrzeug mit Luftfedern**

(30) Priorität: 27.08.1999 DE 19940922
(71) Anmelder: Continental Aktiengesellschaft, 30165 Hannover (DE)
(72) Erfinder: Schoo, Helmut, 30823 Garbsen (DE)

(57) **Zusammenfassung**

Die Erfindung betrifft ein Niveauregelsystem für ein Fahrzeug mit Luftfedern 2a ― 2d, das einen Druckluftspeicher aufweist, der zum Auffüllen der Luftfedern 2a ― 2d mit diesem verbindbar ist. Als Druckluftspeicher wird das Reserverad 30 des Fahrzeuges verwendet. Somit braucht kein separater Druckluftspeicher bereitgestellt zu werden, was Bauraum- und Kostenersparnisse mit sich bringt.

## Beschreibung

Die Erfindung betrifft ein Niveauregelsystem für ein Fahrzeug mit Luftfedern, durch die ein Fahrzeugaufbau gegenüber mindestens einer Fahrzeugachse abgefedert ist, das folgende Merkmale aufweist:
- einen Druckluftspeicher, der zum Auffüllen der Luftfedern mit diesem verbindbar ist
- eine Druckluftquelle, die zum Auffüllen der Luftfedern und des Druckspeichers mit diesen Bauteilen verbindbar ist.

Derartige Niveauregelsysteme werden bereits heute in moderne Kraftfahrzeuge eingebaut. Während des Betriebes des Niveauregelsystems werden die Luftfedern im Bedarfsfall mit Druckluft aus dem Druckluftspeicher aufgefüllt. Fällt der Luftdruck im Druckluftspeicher unter den Luftdruck im Niveauregelsystem ab, so ist ein Auffüllen der Luftfedern mit Hilfe des Druckluftspeichers nicht mehr möglich. In diesem Fall wird der Druckluftspeicher mit Hilfe eines Kompressors mit Druckluft befüllt, bis der Luftdruck in diesem wieder oberhalb des Luftdruckes im Niveauregelsystem liegt.

Die Bereitstellung eines Druckluftspeichers in einem Niveauregelsystem bietet den Vorteil, dass die Luftfedern üblicherweise aus diesem aufgefüllt werden können, so dass der Kompressor nicht zum Auffüllen der Luftfedern sondern nur zum Auffüllen des Druckluftspeichers eingeschaltet zu werden braucht. Die Anzahl der Ein- und Ausschaltvorgänge und die Laufdauer des Kompressors ist somit auf ein Minimum reduziert, so dass sich dessen Lebensdauer erhöht.

Es ist jedoch festzustellen, dass der Druckluftspeicher je nach Fahrzeugtyp ein Luftvolumen von ca. 5 ― 15 Litern (ca. 5 Liter bei einem PKW und ca. 15 Liter bei einem Geländewagen) umschließen muß und dementsprechend viel Bauraum im Kraftfahrzeug benötigt. Darüber hinaus muß der Druckluftspeicher schwingend gelagert werden, damit er im Betrieb des Kraftfahrzeuges keine unerwünschten Geräusche erzeugt. Schließlich verursacht die Bereitstellung eines Druckluftspeichers in einem Niveauregelsystem hohe Kosten.

Der Erfindung liegt die Aufgabe zugrunde, ein Niveauregelsystem mit einem Druckluftspeicher zu schaffen, der möglichst wenig Bauraum benötigt.

Gemäß dem kennzeichnenden Merkmal des Anspruchs 1 wird die Aufgabe dadurch gelöst, dass das Fahrzeug über ein Reserverad verfügt, und dass das von dem Reifen des Reserverades eingeschlossene Luftvolumen als Druckluftspeicher verwendet wird.

Der Vorteil der Erfindung ist insbesondere darin zu sehen, dass als Druckluftspeicher des Niveauregelsystems das ohnehin in den meisten Kraftfahrzeugen vorhandene Reserverad verwendet wird, so dass für diesen kein separater Bauraum im Fahrzeug zur Verfügung gestellt werden muß. Ein weiterer Vorteil der Erfindung ist dann zu sehen, dass das Luftvolumen eines Reserverades je nach Fahrzeugtyp bei 15 ― 40 Litern liegt und somit wesentlich größer ist als das Luftvolumen eines herkömmlichen Druckluftspeichers. Darüber hinaus ist ein weiterer Vorteil der Erfindung dann zu sehen, dass sowohl die Anschaffungskosten als auch die Montagekosten für einen herkömmlichen Druckluftspeicher entfallen.

Gemäß einer Weiterbildung der Erfindung nach Anspruch 2 weist das Niveauregelsystem ein Ablassventil auf, das in einem ersten Schaltzustand eine Verbindung des Luftvolumens des Reserverades zur Atmosphäre sperrt und in einem zweiten Schaltzustand das Luftvolumen des Reserverades mit der Atmosphäre solange verbindet, bis im Reifen des Resereverades ein bestimmter Restdruck erreicht ist. Der Restdruck wird vorzugsweise so vorgegeben, dass er in etwa dem ordnungsgemäßen Luftdruck eines am Fahrzeug verwendeten (rollenden) Reifens entspricht. Der Vorteil dieser Weiterbildung ist darin zu sehen, dass der Luftdruck im Reserverad im Bedarfsfall auf den ordnungsgemäßen Luftdruck eines am Fahrzeug verwendeten Reifens abgesenkt werden kann, ohne eine aufwendige Druckmessung vornehmen zu müssen.

Ein Absenken des Luftdruckes im Reserverad ist im Bedarfsfall aus Sicherheitsgründen wichtig, weil der Luftdruck im Reserverad deutlich oberhalb des ordnungsgemäßen Luftdruckes für ein am Fahrzeug rollendes Rad liegen muß, wenn das Reserverad als Druckluftspeicher verwendet werden soll. So liegt der Luftdruck in einem Niveauregelsystem je nach Fahrzeugtyp zwischen 10 und 12 bar. Um ein Auffüllen der Luftfedern mittels des Reserverades zu ermöglichen, muß der Luftdruck in diesem also zwischen 12 und 15 bar liegen. Der ordnungsgemäße Luftdruck eines am Fahrzeug rollenden Rades liegt je nach Fahrzeugtyp zwischen 2 und 3 bar. Dementsprechend muß der Luftdruck um ca. 10 bar abgesenkt werden, wenn das Reserverad ein am Fahrzeug rollendes Rad im Bedarfsfall ersetzen soll. Das Ablassventil kann beispielsweise so ausgebildet sein, dass es von einer Bedienperson mechanisch (z. B. über einen Hebel am Ventil) oder elektrisch (z. B. über einen Schalter im Armaturenbrett) von dem ersten Schaltzustand in den zweiten Schaltzustand überführt wird.

Gemäß einer Weiterbildung der Erfindung nach Anspruch 3 geht das Ablassventil automatisch von dem ersten Schaltzustand in den zweiten Schaltzustand über, wenn das Reserverad aus seiner Halterung im Fahrzeug gelöst oder entfernt wird. Der Vorteil dieser Weiterbildung ist darin zu sehen, dass das Luftvolumen des Reserverades im Bedarfsfall automatisch mit der Atmosphäre verbunden wird und sich somit der Luftdruck im Reserverad automatisch absenkt. Der Eingriff einer Bedienperson zur Überführung des Ablassventiles von dem ersten Schaltzustand in den zweiten Schaltzustand ist nicht notwendig und kann daher auch nicht vergessen werden.

Gemäß einer Weiterbildung der Erfindung nach Anspruch 4 geht das Ablassventil automatisch von dem zweiten Schaltzustand in den ersten Schaltzustand über, wenn das Reserverad in seiner Halterung im Fahrzeug eingebracht oder dort befestigt wird. Der Vorteil dieser Weiterbildung ist darin zu sehen, dass das Ablassventil ohne Eingriff einer Bedienperson die Verbindung des Luftvolumens des Reserverades zur Atmosphäre sperrt, wenn das Reserverad (z. B. ein neues oder repariertes Reserverad nach einer Reifenpanne) in seine Halterung im Fahrzeug eingebracht oder dort befestigt wird und das Reserverad somit als funktionstüchtiger Druckluftspeicher im Niveauregelsystem zur Verfügung steht.

Gemäß einer Weiterbildung der Erfindung nach Anspruch 5 enthält das Reserverad ein hochdruckbeständiges Ventil, über das der Luftraum des Reserverades mit den Luftfedern verbindbar ist. Dieses Ventil wird auch im normalen Betrieb zum Auffüllen bzw. Ablassen von Druckluft im bzw. aus dem Reserverad genutzt. Die Hochdruckbeständigkeit des Ventiles kann beispielsweise dadurch erreicht werden, dass der Ventilkörper aus Metall ausgebildet wird. Der Vorteil dieser Weiterbildung ist darin zu sehen, dass das Reserverad des Fahrzeuges über einen langen Zeitraum als Druckluftspeicher im Niveauregelsystem verwendet werden kann, ohne dass sein Ventil Schaden nimmt.

Gemäß einer Weiterbildung der Erfindung nach Anspruch 6 ist das hochdruckbeständige Ventil an der Felge des Reserverades verschraubt. Der Vorteil dieser Weiterbildung ist darin zu sehen, dass nicht nur das Ventil an sich, sondern auch die Verbindung des Ventiles zur Feige des Reserverades über einen langen Zeitraum besonders belastbar ist.

Gemäß einer Weiterbildung der Erfindung nach Anspruch 7 enthält das Reserverad einen hochdruckbeständigen Reifen. Die Hochdruckbeständigkeit kann beispielsweise dadurch erreicht werden, dass der Reifen über eine erhöhte Anzahl von Festigkeitsträgern oder über zusätzliche Gürtellagen verfügt. Darüber hinaus oder alternativ kann der Reifen derart auf der Feige des Reserverades befestigt werden, dass er auch bei einem hohen Luftdruck nicht von der Felge springt. Dies kann beispielsweise dadurch erreicht werden, dass die Reifenwulste des Reifens die Felge umgreifen und außerhalb des Torusraumes des Reifens unterhalb der Feige radial innen angeordnet sind (eine derartige Verbindung zwischen Reifen und Felge ist an sich bekannt). Der Vorteil dieser Weiterbildung ist darin zu sehen, dass der Luftdruck im Reserverad dauerhaft stark erhöht werden kann und das Reserverad somit seine Funktion als Druckluftspeicher für ein Niveauregelsystem besonders gut erfüllen kann.

Gemäß einer Weiterbildung der Erfindung nach Anspruch 8 ist im Luftvolumen des Reserverades eine Luftdruckkontrollvorrichtung angeordnet, die den in dem Reserverad gemessenen Luftdruck an eine Steuereinheit des Niveauregelsystems überträgt. Der Vorteil dieser Weiterbildung ist darin zu sehen, dass anhand des von der Luftdruckkontrollvorrichtung übermittelten Drucksignals in der Steuereinheit des Niveauregelsystems bestimmt werden kann, ob der Luftdruck in dem Reserverad oberhalb des Luftdruckes im Niveauregelsystem liegt, und somit im Auffüllen der Luftfedern des Niveauregelsystems mittels des Reserverades möglich ist, oder ob das Reserverad zunächst mittels der Druckbettquelle aufgefüllt werden muß. Moderne Kraftfahrzeuge verfügen häufig über ein Reifendruckkontrollsystem, innerhalb dem auch das Reserverad über eine Luftdruckkontrollvorrichtung verfügt, so dass in diesem Fall die Weiterbildung der Erfindung gemäß Anspruch 8 besonders einfach zu realisieren ist. Ein weiterer Vorteil der Weiterbildung gemäß Anspruch 8 ist darin zu sehen, dass eine aufwendige Messung des Luftdruckes im Reserverad, mit Hilfe eines Drucksensors, der außerhalb des Reserverades im Niveauregelsystem angeordnet ist, entfallen kann. Dieser Drucksensor steht somit ausschließlich zur Messung des Luftdruckes in den Luftfedern des Niveauregelsystems zur Verfügung.

Ein Ausführungsbeispiel und weitere Vorteile der Erfindung werden im Zusammenhang mit der nachstehenden Figur erläutert.

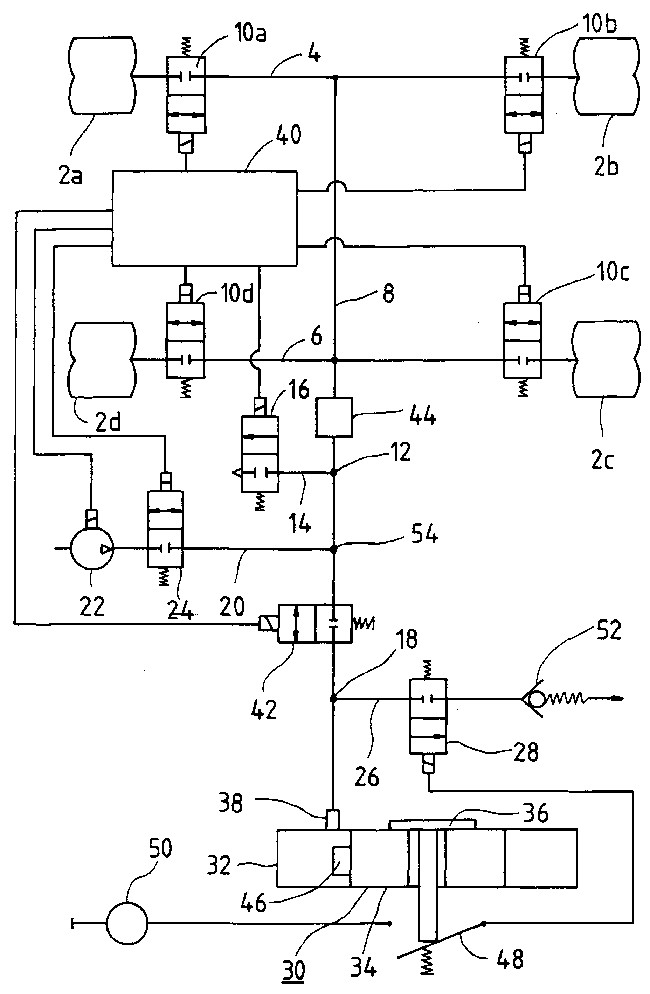

Die Figur zeigt in schematischer Darstellung ein Niveauregelsystem für ein Fahrzeug mit Luftfedern 2a bis 2d in schematischer Darstellung, wobei nur die für die nachfolgenden Erläuterungen benötigten Bestandteile gezeigt sind. Jeweils zwei Luftfedern 2a, 2b und 2c, 2d sind über Querleitungen 4, 6 miteinander verbunden, die wiederum über eine Leitung 8 miteinander in Verbindung stehen. Die Querleitungen 4 und 6 enthalten jeder Luftfeder 2a bis 2d zugeordnet jeweils ein Quersperrventil 10a bis 10d. Von der Leitung 8 zweigt im Punkt 12 eine Leitung 14 ab, die ein steuerbares Ventil 16 enthält, über das die Leitung 8 und damit jede Luftfeder 2a bis 2d mit der Atmosphäre verbindbar ist. Darüber hinaus zweigt in dem Punkt 54 der Leitung 8 eine weitere Leitung 20 ab, die in einer Druckluftquelle in Form eines Kompressors 22 endet. Der Kompressor 22 ist über ein steuerbares Ventil 24 mit der Leitung 8 und damit mit den Luftfedern 2a bis 2d zum Auffüllen dieser verbindbar.

Im Punkt 18 zweigt von der Leitung 8 eine weitere Leitung 26 ab, die über ein steuerbares Ablassventil 28 ebenfalls mit der Atmosphäre verbindbar ist. Die Funktion der Leitung 26 und des steuerbaren Ablassventils wird weiter unten erläutert.

Neben den bisher genannten Bestandteilen verfügt das Niveauregelsystem ferner über einen Druckluftspeicher in Form eines Reserverades 30 (in der Figur im Querschnitt dargestellt), das über einen Reifen 32 verfügt, der auf eine Felge 34 aufgezogen ist. Das Reserverad 30 ist beispielsweise mittels einer Schraube 36 z. B. am (nicht gezeigten) Kofferraumboden des Fahrzeuges befestigt.

Die Leitung 8 des Niveauregelsystems wird auf das hochdruckbeständige Ventil 38 des Reserverades 30 geführt, und dort mit einem Adapter an diesem befestigt, der die Ventilnadel des Reifenventils 38 ständig niederdrückt, so dass das von dem Reifen 32 des Reserverades 30 eingeschlossene Luftvolumen über das Ventil 38 und über die Leitung 8 mit dem Niveauregelsystem in Verbindung steht. Darüber hinaus ist das Luftvolumen über die Leitung 26 und das steuerbare Ventil 28 mit der Atmosphäre verbindbar.

Zwischen den Punkten 18 und einem Drucksensor 44 liegt in der Leitung 8 ein weiteres steuerbares Ventil 42, das in seinem Grundzustand die Verbindung des Luftvolumens des Reserverades 30 von dem Drucksensor 44 des Niveauregelsystems trennt, so dass mit diesem der Druck in den Luftfedern 2a ― 2d meßbar ist (wie dies geschieht, wird weiter unten erläutert). Im anderen Schaltzustand des steuerbaren Ventils 42 ist das Luftvolumen des Reserverades mit den Luftfedern 2a ― 2d verbindbar. Vorzugsweise liegt das steuerbare Ventil 42 zwischen den Punkten 18 und 54, da die Luftfedern 2a ― 2d dann zur Atmosphäre entleert oder mittels des Kompressors 22 aufgefüllt werden können, ohne das Ventil 42 ansteuern zu müssen (wie dies im Einzelnen geschieht, wird weiter unten erläutert).

In der Figur sind alle steuerbaren Ventile 10a bis 10d, 16, 24, 28 und 42 in ihrem Grundzustand gezeigt. Es ist daher weder ein Auffüllen der Luftfedern 2a bis 2d mit Druckluft noch ein Ablassen von Druckluft aus diesen möglich. Darüber hinaus ist das Luftvolumen des Reserverades 30 nicht über das Ventil 28 mit der Atmosphäre verbunden, da dieses in dem gezeigten Grundzustand die Verbindung zur Atmosphäre sperrt. Die steuerbaren Ventile 10a bis 20d, 16, 24 und 42 können durch die Steuereinheit 40 des Niveauregelsystems in ihren anderen Schaltzustand überführt werden, indem diese ein Signal an die entsprechenden Signalleitungen zu den Steuereingängen der Ventile anlegt.

Im Folgenden wird erläutert, wie aus der Luftfeder 2a Druckluft abgelassen werden kann. Dazu werden zunächst von der Steuereinheit 40 des Niveauregelsystems die Steuereingänge der Ventile 10a und 16 bestromt, so dass diese von dem in der Figur gezeigten Grundzustand in ihren anderen Schaltzustand übergehen. Die Luftfeder 2a ist dann über die Querleitung 4, die Leitung 8 und die Leitung 14 mit der Atmosphäre verbunden, so dass Druckluft aus dieser abgelassen wird. Wenn der Ablassvorgang abgebrochen werden soll, werden die Steuereingänge der Ventile 10a und 16 durch die Steuereinheit 40 nicht mehr bestromt, so dass diese wiederum in den in der Figur gezeigten Grundzustand übergehen. Entsprechend können die Luftfedern 2b bis 2d entleert werden.

Im Folgenden wird erläutert, wie die Luftfeder 2a mittels des Luftvolumens, das von dem Reifen 32 des Reserverades 30 umschlossen wird, aufgefüllt wird. Zuvor wird in der Steuereinheit 40 überprüft, ob der Luftdruck im Reserverad 30 größer ist als der Luftdruck in der Luftfeder 2a, denn nur dann ist ein Auffüllen der Luftfeder 2a mit Hilfe des Luftvolumens des Reserverades 30 möglich. Der Luftdruck in der Luftfeder 2a kann beispielsweise mittels des Drucksensors 44 gemessen werden, indem das Ventil 10a von der Steuereinheit 40 von dem in der Figur gezeigten Grundzustand in den anderen Schaltzustand überführt wird, und alle anderen Ventile weiterhin den in der Figur gezeigten Grundzustand einnehmen. In diesem Fall liegt am Drucksensor 44 der Druck in der Luftfeder 2a an, wird dort gemessen und das Ergebnis wird an die Steuereinheit 40 übermittelt. Danach wird das Ventil 10a wieder in den Grundzustand überführt. Auch der Luftdruck des Reserverades 30 kann mit Hilfe des Drucksensors 44 gemessen werden, indem der Steuereingang des steuerbaren Ventils 42 durch die Steuereinheit 40 bestromt wird, so dass es von dem in der Figur gezeigten Grundzustand in den anderen Schaltzustand übergeht. An dem Drucksensor 44 liegt dann der Luftdruck in dem Reserverad 30 an, der dort gemessen und an die Steuereinheit 40 weitergegeben wird. Alternativ kann im Luftvolumen des Reifens 32 eine Luftdruckkontrollvorrichtung 46 liegen, mit der der Luftdruck des Reserverades gemessen und in Form eines Hochfrequenzsignals an die Steuereinheit 40 übertragen wird.

Stellt die Steuereinheit 40 durch einen Vergleich der übermittelten Druckwerte fest, dass der Luftdruck in dem Reserverad 30 größer ist als der Luftdruck in der Luftfeder 2a, so wird die Luftfeder 2a mit Hilfe des Reserverades 30 wie folgt aufgefüllt. Durch die Steuereinheit 40 wird der Steuereingang des Ventiles 10a und gleichzeitig der Steuereingang des Ventiles 42 bestromt, so dass die Ventile 10a und 42 von dem in der Figur gezeigten Grundzustand in den anderen Schaltzustand übergehen. Das Luftvolumen des Reserverades 30 steht dann über das Ventil 38, die Leitung 8 und die Querleitung 4 mit der Luftfeder 2a in Verbindung, so dass Luft aus dem Reserverad in die Luftfeder 2a strömen kann. Der Auffüllvorgang wird beendet, indem die Steuereingänge der steuerbaren Ventile 10a und 42 von der Steuereinheit 40 nicht mehr bestromt werden, so dass sie wieder in den in der Figur gezeigten Grundzustand übergehen. Auf entsprechende Art können auch die Luftfedern 2b ― 2d bzw. mehrere Luftfedern 2a ― 2d gleichzeitig aufgefüllt werden.

Soll die Luftfeder 2a aufgefüllt werden und stellt die Steuereinheit 40 fest, dass der Luftdruck in dem Reserverad kleiner ist als der Luftdruck in der Luftfeder 2a, so wird die Luftfeder 2a mit Hilfe des Kompressors 22 aufgefüllt, was wie folgt geschieht: Durch die Steuereinheit 40 werden die Steuereingänge der steuerbaren Ventile 10a und 24 bestromt, so dass diese von dem in der Figur gezeigten Grundzustand in den anderen Schaltzustand übergehen. Der Kompressor 22 steht dann über die Leitungen 20, 8 und die Querleitung 4 mit der Luftfeder 2a in Verbindung. Darüber hinaus wird durch die Steuereinheit der Kompressor 22 angesteuert, so dass dieser Druckluft in die Luftfeder 2a fördert. Auch hier wird der Auffüllvorgang durch die Steuereinheit dadurch beendet, dass die Steuereingänge der steuerbaren Ventile 10a und 24 nicht mehr bestromt werden und diese dann wieder in den in der Figur gezeigten Grundzustand übergehen. Darüber hinaus wird der Kompressor 22 durch die Steuereinheit 40 nicht mehr angesteuert. Entsprechend können die Luftfedern 2b ― 2d oder mehrere Luftfedern 2a ― 2d gleichzeitig durch den Kompressor 22 mit Druckluft aufgefüllt werden.

Wenn der Luftdruck in dem Reserverad 30 unter einen Grenzwert abfällt (was in der Steuereinheit 40 anhand des von dem Drucksensor 44 oder der Luftdruckkontrollvorrichtung 46 für das Reserverad gemessenen Druckwertes festgestellt wird), wird das Reserverad mit dem Kompressor 22 aufgefüllt, bis er oberhalb des Grenzwertes liegt. Der Grenzwert wird so festgelegt, dass er dem maximal möglichen Luftdruck in den Luftfedern 2a ― 2d entspricht oder darüber liegt. Dadurch ist sichergestellt, dass ein Auffüllen der Luftfedern 2a ― 2d mittels des Reserverrades 30 immer möglich ist.

Zum Auffüllen des Reserverades 30 werden von der Steuereinheit 40 durch Bestromung ihrer Steuereingänge die steuerbaren Ventile 24 und 42 von dem in der Figur gezeigten Grundzustand in den anderen Schaltzustand überführt. Der Kompressor steht dann über die Leitung 20, die Leitung 8 und das Ventil 38 mit dem Luftvolumen, das von dem Reifen 32 eingeschlossen wird, in Verbindung. Darüber hinaus wird der Kompressor 22 von der Steuereinheit 40 angesteuert, so dass dieser Druckluft in den Reifen 32 fördert. Zur Beendigung des Auffüllvorganges des Reifens 32 werden die steuerbaren Ventile 24 und 42 wieder in den Grundzustand überführt, darüber hinaus wird der Kompressor 22 nicht mehr durch Steuereinheit 40 angesteuert.

Der Luftdruck in dem Reserverad 30 liegt aufgrund seiner Funktion als Druckluftspeicher oberhalb des ordnungsgemäßen Luftdruckes, den ein am Fahrzeug verwendetes (rollendes) Rad aufweist. Wenn das Reserverad 30 im Pannenfall also am Fahrzeug zum Einsatz kommen soll, ist es aus Sicherheitsgründen zweckmäßig, den Luftdruck des Reifens 32 auf den ordnungsgemäßen Luftdruck abzusenken. Eine Absenkung des Luftdruckes in dem Reifen 32 erfolgt wie im Folgenden erläutert automatisch, wenn man das Reserverad 30 aus seiner Halterung löst. Zunächst wird die Schraube 36 aus ihrem Gewinde entfernt und infolgedessen schließt sich der Schalter 48, der durch die befestigte Schraube 36 in der Öffnungsstellung gehalten wird. Der Steuereingang des steuerbaren Ventils 28 ist dann mit einer Spannungsquelle 50 verbunden, so dass das Ventil 28 von dem in der Figur gezeigten Grundzustand in den anderen Schaltzustand übergeht. Das Luftvolumen des Reifens 32 ist dann über das Ventil 38, die Leitung 8, die Leitung 26 und das Ventil 28 mit der Atmosphäre verbunden. In der Leitung 26 befindet sich ein Restdruckhalteventil 52, das die Verbindung zur Atmosphäre automatisch sperrt, wenn der ordnungsgemäße Luftdruck in dem Reifen 32 erreicht ist. Vorzugsweise ist das Restdruckhalteventil 52 in das steuerbare Ventil 28 integriert. Wenn der ordnungsgemäße Luftdruck in dem Reserverad 30 erreicht ist, wird das Reserverad 30 aus der Halterung entnommen und am Fahrzeug befestigt.

Der ordnungsgemäße Luftdruck kann z. B. daran festgestellt werden, dass über das Ventil 28 keine Luft mehr in die Atmosphäre strömt. Alternativ ist es möglich, dass der von der Luftdruckkontrollvorrichtung 46 gemessene Luftdruck an eine Steuereinheit übermittelt und von dieser (z. B. im Armaturenbrett des Fahrzeuges) angezeigt wird, so dass er direkt abgelesen werden kann. Erreicht der gemessene Luftdruck den ordnungsgemäßen Luftdruck, wird das Reserverad entnommen.

Wenn zu einem späteren Zeitpunkt wieder ein Reserverad mit Hilfe der Schraube 36 in der Halterung befestigt wird, so öffnet diese wiederum den Schalter 48, so dass der Steuereingang des steuerbaren Ventils 28 nicht mehr bestromt wird. Das Ventil 28 geht dann wieder in den in der Figur gezeigten Grundzustand über, so dass die Verbindung des Luftvolumens des Reifens 32 zur Atmosphäre über die Leitung 26 wiederum gesperrt ist.

Es ist nicht zwingend notwendig, dass der Schalter 48 durch die Schraube 36 betätigt wird. Es ist ebenfalls möglich, den Schalter 48 durch das Eigengewicht des Reserverades 30 zu betätigen. In diesem Fall wird der Schalter 48 durch das Gewicht des Reserverades 30 geöffnet, wohingegen er bei Entlastung schließt.

### Bezugszeichenliste

- 2a ― 2d: Luftfeder
- 4, 6: Querleitung
- 8: Leitung
- 10a ― 10d: Quersperrventil
- 12: Punkt
- 14: Leitung
- 16: Ventil
- 18: Punkt
- 20: Leitung
- 22: Kompressor
- 24: Ventil
- 26: Leitung
- 28: Ventil
- 30: Reserverad
- 32: Reifen
- 34: Felge
- 36: Schraube
- 38: Ventil
- 40: Steuereinheit
- 42: Ventil
- 44: Drucksensor
- 46: Luftdruckkontrollvorrichtung
- 48: Schalter
- 50: Spannungsquelle
- 52: Restdruckhalteventil
- 54: Punkt

## Patentansprüche

1. Niveauregelsystem für ein Fahrzeug mit Luftfedern (2a ― 2d), durch die ein Fahrzeugaufbau gegenüber mindestens einer Fahrzeugachse abgefedert ist, das folgende Merkmale aufweist:
- einen Druckluftspeicher, der zum Auffüllen der Luftfedern (2a ― 2d) mit diesen verbindbar ist
- eine Druckluftquelle (22), die zum Auffüllen der Luftfedern (2a ― 2d) und des Druckspeichers mit diesen Bauteilen verbindbar ist,
**dadurch gekennzeichnet,** dass das Fahrzeug über ein Reserverad (30) verfügt und das dass von dem Reifen des Reserverades (30) eingeschlossene Luftvolumen als Druckluftspeicher verwendet wird.

2. Niveauregelsystem nach Anspruch 1, dadurch gekennzeichnet, dass es ein Ablassventil (28) aufweist, das in einem ersten Schaltzustand eine Verbindung des Luftvolumens des Reserverades (30) zur Atmosphäre sperrt und in einem zweiten Schaltzustand das Luftvolumen des Reserverades (30) mit der Atmosphäre solange verbindet, bis im Reifen des Reserverades (30) ein bestimmter Restdruck erreicht ist.

3. Niveauregelsystem nach Anspruch 2, dadurch gekennzeichnet, dass das Ablassventil (28) automatisch von dem ersten Schaltzustand in den zweiten Schaltzustand übergeht, wenn das Reserverad (30) aus seiner Halterung im Fahrzeug gelöst oder entfernt wird.

4. Niveauregelsystem nach einem der Ansprüche 2 bis 3, dadurch gekennzeichnet, dass das Ablassventil (28) automatisch von dem zweiten Schaltzustand in den ersten Schaltzustand übergeht, wenn das Reserverad (30) in seine Halterung im Fahrzeug eingebracht oder dort befestigt wird.

5. Niveauregelsystem nach einem der Ansprüche 1 bis 4, dadurch gekennzeichnet, dass das Reserverad (30) ein hochdruckbeständiges Ventil (38) enthält, über das der Luftraum des Reserverades (30) mit den Luftfedern verbindbar ist.

6. Niveauregelsystem nach Anspruch 5, dadurch gekennzeichnet, dass das hochdruckbeständige Ventil (38) an der Felge des Reserverades (30) verschraubt ist.

7. Niveauregelsystem nach einem der Ansprüche 1 bis 6, dadurch gekennzeichnet, dass das Reserverad (30) einen hochdruckbeständigen Reifen enthält.

8. Niveauregelsystem nach einem der Ansprüche 1 bis 7, dadurch gekennzeichnet, dass im Luftvolumen des Reserverades (30) eine Luftdruckkontollvorrichtung (46) angeordnet ist, die den im Reserverad (30) gemessenen Luftdruck an eine Steuereinheit (40) des Niveauregelsystems übermittelt.
